**Europäisches Patentamt**

**European Patent Office**

**Office européen des brevets**

(19)

(11) Veröffentlichungsnummer: **0 154 873**

**B1**

# (12) EUROPÄISCHE PATENTSCHRIFT

(45) Veröffentlichungstag der Patentschrift:
**04.11.87**

(51) Int. Cl.⁴: **B 65 B 9/20,** B 65 D 30/00

(21) Anmeldenummer: **85102015.6**

(22) Anmeldetag: **23.02.85**

(54) **Verfahren zum Herstellen und Befüllen von Bodenfalzbeuteln aus endlosem, ggf. aus endlosem Flachmaterial gebildeten Schlauchmaterial, Vorrichtung zur Durchführung dieses Verfahrens sowie insbesondere danach hergestellter Bodenfalzbeutel.**

(30) Priorität: **27.02.84 DE 3407045**
**04.07.84 DE 3424654**

(43) Veröffentlichungstag der Anmeldung:
**18.09.85 Patentblatt 85/38**

(45) Bekanntmachung des Hinweises auf die Patenterteilung:
**04.11.87 Patentblatt 87/45**

(84) Benannte Vertragsstaaten:
**AT BE CH DE FR GB IT LI LU NL SE**

(56) Entgegenhaltungen:
**DE-A-2 143 819**
**US-A-3 552 087**
**US-A-4 365 459**

(73) Patentinhaber: **Effem GmbH, Eitzer Landstrasse,**
**D-2810 Verden/Aller (DE)**

(72) Erfinder: **Kiel, Hans Richard, Elbinger Strasse 66,**
**D-2806 Oyten (DE)**

(74) Vertreter: **Goddar, Heinz J., Dr., FORRESTER &**
**BOEHMERT Widenmayerstrasse 4/I, D-8000**
**München 22 (DE)**

EP 0 154 873 B1

## Beschreibung

Die Erfindung betrifft einen Bodenfalzbeutel nach den der Einleitung des Patentanspruches 1, ein Verfahren zur Herstellung eines derartigen Bodenfalzbeutels nach der Einleitung des Patentanspruches 5 sowie eine Vorrichtung zur Durchführung dieses Verfahrens nach der Einleitung des Patentanspruches 8.

Verfahren und Vorrichtungen der vorstehend angegebenen Art finden zur Herstellung von Bodenfalzbeuteln, insbesondere aus endlosem Kunststoffschlauchmaterial, beispielsweise Hochdruckpolyäthylen, in immer steigendem Maße Verwendung. Die Bildung der Bodenlaschen dient dabei u. a. dem Zweck, eine möglichst rechteckige und nach dem Befüllen eben bleibende Standfläche zu erzeugen, da diese beispielsweise das Lagern der gefüllten erleichtert. Eine Schwierigkeit besteht allerdings dadurch, daß bei den bekannten Bodenfalzbeuteln, bei denen also die einzelnen Bodenlaschenlagen nicht miteinander verbunden sind, sondern lediglich durch das Füllgut aneinander angedrückt werden, darin, daß insbesondere bei Füllgut mit geringer innerer Konsistenz, wie beispielsweise Tierstreu, Granulaten oder anderen rieselfähigen Gütern, die Bodenfläche nicht in befriedigender Weise ihre ebene Konfiguration behält, so daß der Beutel nur schlecht stehenbleibt.

Aus der US-A-37 39 977 sind bereits ein Bodenfalzbeutel sowie ein Verfahren der in der Einleitung der Patentansprüche 1 bzw. 5 vorausgesetzten Art bekannt, bei denen die dreieckigen, doppelwandigen Bodenlaschen an den vier Ecken der Seitenwände miteinander verbunden werden. Ähnliche Verfahren sowie Bodenfalzbeutel sind auch aus der US-A-37 72 116 sowie der US-A-42 30 030 bekannt. Ferner zeigen die US-A-40 79 662 sowie die US-A-43 65 459 Vorrichtungen zum Herstellen von Bodenfalzbeuteln der in der Einleitung des Patentanspruches 1 vorgesetzten Art. Es hat sich gezeigt, daß die vorstehend erwähnten Verfahren bzw. Vorrichtungen ebenso wie die damit herstellbaren Bodenfalzbeutel die Anforderungen einer kostengünstigen Herstellung von Bodenfalzbeuteln bei zuverlässig ebener Konfiguration der Standfläche insbesondere bei rieselfähigen Gütern noch nicht befriedigend lösen. Auch ein aus der DE-B 830 157 bekannter Seitenfaltensack, bei dem die Bodenlaschen mit dem Bodenteil verklebt werden, befriedigt in dieser Hinsicht nicht.

Der Erfindung liegt daher die Aufgabe zugrunde, einen Bodenfalzbeutel, ein Verfahren sowie eine Vorrichtung der gattungsgemäßen Art zu schaffen, welche kostengünstig sind und bei denen die Beibehaltung der ebenen Konfiguration der im wesentlichen rechteckigen Standfläche auch bei rieselfähigen Gütern etc. mit minimalem Energie- und Materialaufwand, insbesondere zum Verbinden der verschiedenen Schlauchmateriallagen, gewährleistet ist.

Erfindungsgemäß wird diese Aufgabe bei einem Bodenfalzbeutel der eingangs genannten Art durch die im Kennzeichen des Patentanspruches 1 aufgeführten Merkmale gelöst. Das Verfahren nach der Erfindung ist zur Lösung der gestellten Aufgabe durch die im Kennzeichen des Patentanspruches 5 genannten Merkmale ausgezeichnet. Die erfindungsgemäße Vorrichtung ist durch die Merkmale nach dem Kennzeichen des Patentanspruches 8 gekennzeichnet.

Besonders bevorzugte Ausführungsformen der Erfindung sind Gegenstand der Unteransprüche 2 bis 4 (Bodenfalzbeutel), 5 bis 7 (Verfahren) und 8 bis 15 (Vorrichtung).

Durch die erfindungsgemäß in charakteristischer Weise vorgesehene Verbindung zumindest der beiden oberen Lagen der Bodenlaschen, sei es flächig oder in Form von Verbindungsnähten, vorzugsweise aber aller drei Lagen der Bodenlaschen, wird eine Verformung der ebenen, rechteckigen Standfläche unter dem Einfluß des rieselfähigen Füllgutes weitestgehend vermieden, so daß die Bodenfläche im wesentlichen eben bleibt und ein zuverlässiges Aufstellen des Bodenfalzbeutels gewährleistet ist.

Die US-A-37 39 977 beschreibt einen Bodenfalzbeutel, bei dem die Bodenlaschen nach innen gefaltet und an den Boden angeklebt sind, jedoch findet sich dabei insbesondere kein Hinweis auf die erfindungsgemäß vorzugsweise vorgesehene Ausführungsform, bei der vorzugsweise unterteilte Verbindungsnähte bzw. eine zusätzliche Verbindungsnaht, neben einer der Seitenkante des Bodenfalzbeutels benachbarten, nahe der Bodenlaschenspitze vorgesehen ist, ebenso wenig wie dies bei den Beuteln nach der US-A-37 72 116 oder 42 30 030 der Fall ist, die somit insgesamt keine Beutel betreffen, welche die erfindungsgemäß erzielbaren Vorteile aufweisen.

Nachstehend sind Ausführungsbeispiele der Erfindung anhand der schematischen Zeichnung im einzelnen erläutert. Dabei zeigt:

Fig. 1 in zwei verschiedenen Arbeitspositionen den Siegelstempel eines Ausführungsbeispieles einer zur Durchführung des Verfahrens nach der Erfindung geeigneten erfindungsgemäßen Vorrichtung im vertikalen Längsschnitt entlang einer die herzustellende Bodenlängsnaht des herzustellenden Bodenfalzbeutels enthaltenden Ebene;

Fig. 2 ein Ausführungsbeispiel eines Bodenfalzbeutels nach der Erfindung in der Ansicht von der Bodenfläche aus; und

Fig. 3 den Bodenfalzbeutel von Fig. 2 im vertikalen Längsschnitt quer zur Bodenlängsnaht entlang der Mittellinie der nahe der Seitenkante angeordneten Verbindungsnaht.

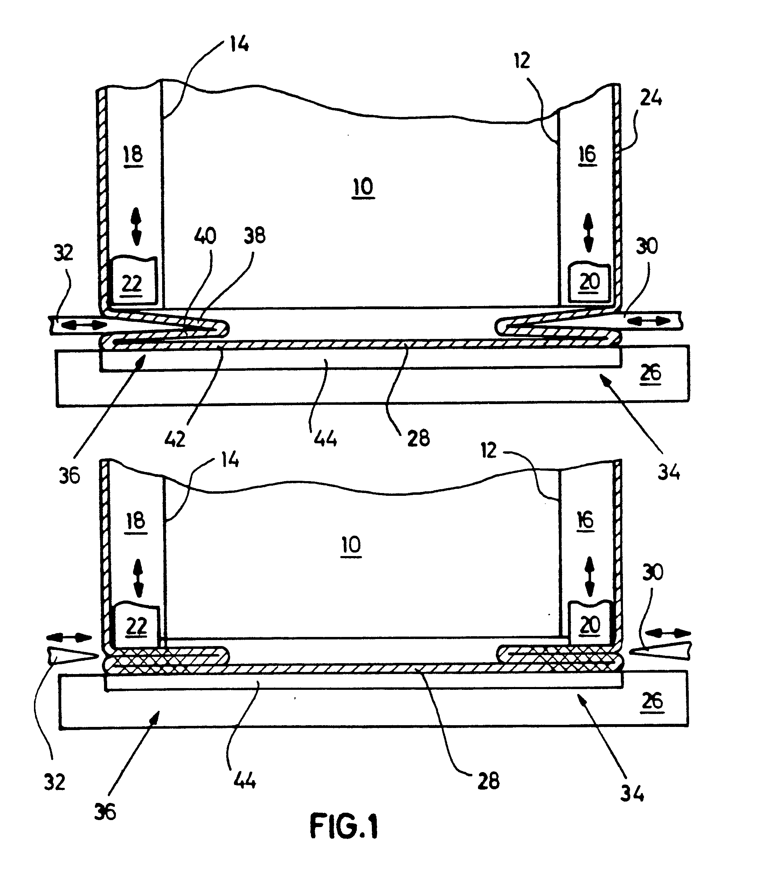

Wie Fig. 1 erkennen läßt, weist die Vorrichtung nach der Erfindung bei dem dort gezeigten Ausführungsbeispiel einen vertikal angeordneten Formatschacht 10 auf, an dessen beiden Seiten mittels einer senkrecht zur Zeichenebene verlaufenden Trennwand 12, 14 jeweils ein im wesentlichen füllgutdicht gegen den zentralen Einfüllbereich des Formatschachtes 10 abgetrennter Führungsschacht 16, 18 gebildet ist. In jedem der Führungsschächte 16, 18 ist in der durch die Pfeile angedeuteten Weise ein Siegelstempel 20, 22 angebracht, wobei die Siegelstempel 20, 22 beispielsweise elektrisch oder auch hydraulisch betätigbar sein können. Über den im wesentlichen rechteckigen Außenumfang des Formatschachtes 10 wird ein Folienschlauch 24 aus bei dem gezeigten Ausführungsbeispiel heißsiegelfähigem thermoplastischen Material, nämlich Hochdruckpolyäthylen, der - in der Zeichnung nicht dargestellt - vor dem Erreichen des Formatschachtes in bekannter Weise aus einer Folienbahn gebildet worden ist, nach unten geführt. Zur Bildung jeweils eines Bodenfalzbeutels wird der Folienschlauch 24 unterhalb des Formatschachtes 10 mittels eines senkrecht zur Zeichenebene von Fig. 1 hin- und herbeweglichen Quersiegelwerkzeuges 26, beispielsweise in Form einer Quersiegelzange mit beheizbaren Backen, wie bekannt, zusammengedrückt, wobei gleichzeitig eine in der Zeichenbene verlaufende Bodenlängsnaht gebildet und in bekannter Weise der weiter unten befindliche, bereits gefüllte Beutel unter Bildung einer oberen Längsnaht verschlossen und gleichzeitig von dem Folienschlauch bzw. dem gerade zur Einfüllung vorbereiteten, hier diskutierten Bodenfalzbeutel abgetrennt wird. Vorher dienen zwei in Richtung der gezeichneten Pfeile horizontal hin- und herbewegliche Faltwerkzeuge 30, 32 zum Einschlagen des Schlauchmaterials von den Seiten des herzustellenden Beutels her unter Bildung von weiter unten noch näher diskutierten Bodenlaschen 34, 36 die, in der Zeichnung aus Richtung des Formatschachtes 10 gesehen, im wesentlichen dreieckförmigen Umriß haben und jeweils aus drei Bodenlaschenlagen 35, 40, 42 bestehen, von denen die obere, 38, zum Inneren des herzustellenden Bodenfalzbeutels hin liegt, die mittlere, 40, an die obere Bodenlaschenlage 38 in Anlage kommt und die untere Bodenlaschenlage, 42, einen Teil der Bodenfläche des Bodenfalzbeutels bildet. Das Quersiegelwerkzeug 26 weist im übrigen ein bei dem gezeigten Ausführungsbeispiel ebenso wie die Siegelstempel 20, 22 flächig beheizbares Widerlager 44 auf, wobei die Bewegungen des Quersiegelwerkzeuges 26, der Faltwerkzeuge 30, 32 und der Siegelstempel 20, 22 natürlich in dem Fachmann ohne weiteres ersichtlicher Weise synchronisiert sind.

Die vorstehend beschriebene Vorrichtung arbeitet in folgender Weise:

Nachdem in eine hinreichende Schlauchlänge des Folienschlauches 24 über den Außenumfang des Formschachtes 10 in bekannter Weise nach unten abgezogen worden ist, erfolgt, wie ebenfalls bekannt, so daß hier auf eine nähere Beschreibung verzichtet werden kann, das Einschlagen der Bodenlaschen 34, 36 sowie das Herstellen der Bodenlängsnaht 28 durch entsprechende Betätigung der Faltwerkzeuge 30, 32 bzw. des Quersiegelwerkzeuges 26. Dieser Verfahrensschritt ist in Fig. 1 oben dargestellt. Im Anschluß hieran werden, wie in Fig. 1 unten ersichtlich, die Faltwerkzeuge 30, 32 in ihre außenliegende Ruheposition zurückgezogen, woraufhin in erfindungsgemäßer, neuartiger Weise die Siegelstempel 20, 22 nach unten bewegt werden und unter Anpressen der drei Bodenlaschenlagen 38, 40, 42 an das Widerlager 44 des Quersiegelwerkzeuges 26 alle drei Lagen in den in Fig. 1, unten, zweifach schräg gestrichelten Bereich miteinander verbinden.

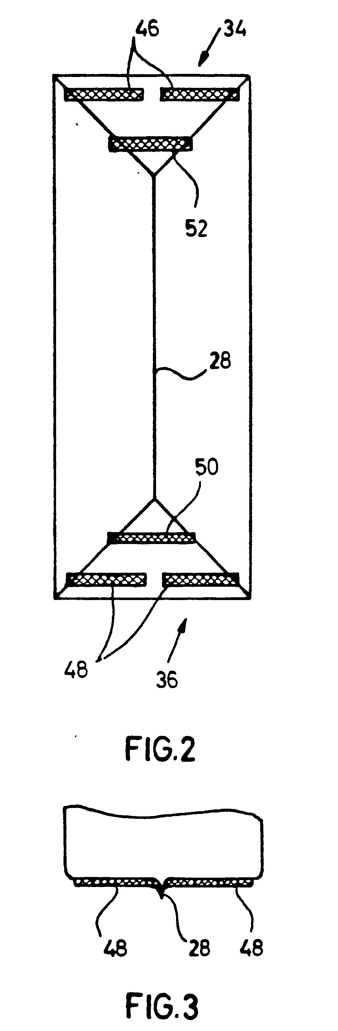

In Fig. 2 ist ein mittels der Vorrichtung von Fig. 1 hergestellter Bodenfalzbeutel gezeigt, wobei die Verbindungsbereiche der Bodenlaschen 34, 36, in denen also die drei Bodenlaschenlagen 38, 40, 42 jeweils miteinander verbunden sind, zweifach schräg gestrichelt dargestellt sind. Wie Fig. 2 erkennen läßt, sind die Bodenlaschenlagen 38, 40, 42 lediglich nahe den Seitenkanten des Bodenfalzbeutels durch quer zur Bodenlängsnaht 28 verlaufende Verbindungsnähte 46, 48 bzw. 50, 52 miteinander verbunden, wobei die den Seitenkanten nächstliegenden Verbindungsnähte 46, 48 eine Unterbrechung aufweisen, während die Verbindungsnähte 50, 52, die nahe den Bodenlaschenspitzen liegen, durchgehend ausgebildet sind. Durch die Anordnung der Verbindungsnähte kann auch ein "Einsickern" von rieselfähigem Füllgut in den Bereich zwischen Bodenfläche und mittlerer Lage 40 der Bodenlaschen 34, 36 verhindert werden, wodurch ansonsten Schwierigkeiten beim Entleeren entstehen könnten.

**Patentansprüche**

1. Bodenfalzbeutel mit zwei seitlichen, im wesentlichen dreieckigen Bodenlaschen (34, 36) in deren Bereich das zur Herstellung verwendete Schlauchmaterial dreifach liegt, und einer dadurch erzeugten im wesentlichen rechteckigen Standfläche, die durch eine im wesentlichen rechteckige, eine Bodenlängsnaht (28) aufweisende Bodenfläche gebildet ist, an die von den Seiten des Bodenfalzbeutels her in dessen Innerem die Bodenlaschen (34, 36) angeschlagen sind, und wobei zumindest die beiden der Bodenfläche abgewandten Lagen der Bodenlaschen (34, 36) miteinander verbunden sind, dadurch gekennzeichnet, daß im wesentlichen quer zur Bodenlängsnaht (28) wenigstens jeweils eine nahe der Seitenkante des Bodenfalzbeutels angeordnete Verbindungsnaht (46, 48) sowie eine nahe der jeweiligen Bodenlaschenspitze angeordnete Verbindungsnaht (50, 52) vorgesehen sind, die in Form gerader Linien ausgebildet sind und von denen wenigstens eine in ihrer Längserstreckung unterteilt ausgebildet ist.

2. Bodenfalzbeutel nach Anspruch 1, dadurch gekennzeichnet, daß die den Seitenkanten des Bodenfalzbeutels nächstliegenden Verbindungsnähte (46, 48) in ihrer Längserstreckung unterteilt ausgebildet sind.

3. Bodenfalzbeutel nach Anspruch 1 oder 2, hergestellt aus heißsiegelbarem Material, insbesondere thermoplastischem Kunststoff, dadurch gekennzeichnet, daß die Bodenlaschenlagen (38, 40, 42) miteinander heißversiegelt sind.

4. Bodenfalzbeutel nach einem der vorangehenden Ansprüche, dadurch gekennzeichnet, daß die Bodenlaschenlagen (38, 40, 42) miteinander verklebt, vorzugsweise heißverklebt sind.

5. Verfahren zum Herstellen des Bodenfalzbeutels nach einem der vorangehenden Ansprüche aus endlosem, ggf. aus endlosem Flachmaterial gebildeten Schlauchmaterial, sowie zum Befüllen des Bodenfalzbeutels, bei dem zur Erzeugung der Bodenlaschen (34, 36) das Schlauchmaterial von den Seiten des zu bildenden Beutels her eingeschlagen wird und nach Bildung der Bodenlängsnaht (28) durch Zusammendrücken des Schlauchmaterials und Miteinander-Verbinden der auf diese Weise in gegenseitige Anlage gebrachten Schlauchmateriallagen, mit nachfolgendem Abtrennen, das Befüllen mit vorzugsweise rieselfähigem Füllgut erfolgt, dadurch gekennzeichnet, daß im wesentlichen quer zur Bodenlängsnaht (28) wenigstens jeweils eine nahe der Seitenkante des Bodenfalzbeutels angeordnete Verbindungsnaht (46, 48) sowie eine nahe der jeweiligen Bodenlaschenspitze angeordnete Verbindungsnaht (50, 52) vorgesehen werden, von denen wenigstens eine (46, 48) in Form einer geraden Linie und in ihrer Längserstreckung unterteilt ausgebildet wird.

6. Verfahren nach Anspruch 5, dadurch gekennzeichnet, daß die Bodenlaschenlagen (38, 40, 42) bei Verwendung von heißsiegelbarem Material, insbesondere von thermoplastischem Kunststoff, miteinander heißversiegelt werden.

7. Verfahren nach Anspruch 5, dadurch gekennzeichnet, daß die Bodenlaschenlagen (38, 40, 42) miteinander verklebt, vorzugsweise heißverklebt werden.

8. Vorrichtung zur Durchführung des Verfahrens nach einem der Ansprüche 5 bis 7, wobei im Bereich der Bodenlaschen (34, 36) im wesentlichen vertikal bewegliche Einrichtungen (20, 22) zum Verbinden der Bodenlaschenlagen (38, 40, 42) vorgesehen sind, dadurch gekennzeichnet, daß innerhalb des Formatschachtes (10) im wesentlichen füllgutdicht gegenüber dem Einfüllbereich angeschlossene seitliche Führungsschächte (16, 18) mit jeweils darin vertikal beweglichem Siegelstempel (20, 22) angeordnet sind, mittels welcher die Bodenlaschenllagen (38, 40, 42) der Bodenlaschen (34, 36) gegen ein Widerlager, ggf. ein Widerlager (44) des Quersiegelwerkzeuges (26) oder das als Widerlager dienende Quersiegelwerkzeug, preßbar sind.

9. Vorrichtung nach Anspruch 8, dadurch gekennzeichnet, daß die Siegelstempel (20, 22) beheizbar sind.

10. Vorrichtung nach Anspruch 8 oder 9, dadurch gekennzeichnet, daß das Widerlager (44) beheizbar ist.

11. Vorrichtung nach einem der Ansprüche 8 bis 10, dadurch gekennzeichnet, daß die Siegelstempel (20, 22) und/oder das Widerlager (44) zumindest bereichsweise kühlbar sind bzw. ist.

12. Vorrichtung nach einem der Ansprüche 8 bis 11, gekennzeichnet durch Einrichtungen zum Aufbringen eines (Heiß-) Klebers auf die miteinander zu verklebenden Flächen der Bodenlaschenlagen (38, 40, 42).

13. Vorrichtung nach Anspruch 12, dadurch gekennzeichnet, daß die Siegelstempel (20, 22) eine Injektionseinrichtung zum Durchbohren wenigstens einer der Bodenlaschenlagen (38, 40, 42) und Einbringen des Klebers zwischen die obere (38) und die mittlere Bodenlaschenlage (40) aufweisen.

14. Vorrichtung nach Anspruch 12 oder 13, gekennzeichnet durch seitlich in den Bereich der Bodenlaschen (34, 36) eingreifende Kleberaufbringeinrichtungen.

15. Vorrichtung nach Anspruch 14, dadurch gekennzeichnet, daß die Kleberaufbringeinrichtungen eine Injektionseinrichtung zum Durchbohren der mittleren Bodenlaschenlage (40) und Einbringen des Klebers zwischen die mittlere Bodenlaschenlage (40) und die untere Bodenlaschenlage (42) aufweisen.

## Claims

1. A bottom fold bag having two substantially triangular lateral bottom flaps (34, 36) near which the flexible hose material used to make the bag is present in triplicate, the bag also having a resulting substantially rectangular standing area formed by a substantially rectangular base surface having a base longitudinal seam (28) to which the base flaps (34, 36) are secured from the bag sides in the bag interior, at least those two layers of the bottom flaps (34, 36) which are distant from the base surface being interconnected, characterised in that at least one connecting seam (46, 48) disposed near the side edge of the bag, and a connecting seam (50, 52) disposed near the particular bottom flap apex concerned, are provided which extend substantially transversely to the base longitudinal seam (28) and are in the form of straight lines, at least one of such seams being subdivided in its length.

2. A bag according to claim 1, characterised in that the connecting seams (46, 48) nearest the bag side edges are subdivided in their length,

3. A bag according to claim 1 or 2 made of hot-sealable material, more particularly thermoplastics, characterised in that the bottom flap layers (38, 42) are interconnected by hot sealing,

4. A bag according to any of the previous claims, characterised in that the bottom flap layers (38, 40, 42) are stuck together, preferably by hot sticking.

5. A method of producing the bag according to any of the previous claims from an endless flexible tubular material possibly formed from endless flat material, and of filling of the bag, wherein to produce the bottom flaps (34, 36) the flexible hose material is knocked in from the sides of the subsequent bag and, after the bottom longitudinal seam (28) has been formed by pressing together the hose material and interconnecting the layers thereof thus brought into contact with one another, with subsequent separation, filling with a preferably trickleable bulk material proceeds, characterised in that at least one connecting seam (46, 48) disposed near the side edge of the bag, and a connecting seam (50, 52) disposed near the particular bottom flap apex concerned, are disposed substantially transversely to the base longitudinal seam (28), at least one (46, 48) of the latter seams being in the form of a straight line and being subdivided in its length.

6. A method according to claim 5, characterised in that the bottom flap layers (38, 40, 42), are interconnected by hot sealing when the material used is a hot-sealable material, more particularly a thermoplastics.

7. A method according to claim 5, characterised in that the bottom flap layers (38, 40, 42) are interconnected by sticking, preferably hot sticking.

8. An apparatus for performing the method according to any of claims 5 - 7, substantially vertically mobile means (20, 22) for interconnecting the bottom flap layers (38, 40, 42) being disposed near the bottom flaps (34, 36), characterised in that the lateral guide shafts (16, 18) each receiving a vertically movable sealing ram or the like (20, 22) and substantially sealed off as regards filling material from the filling zone are disposed in the format shaft (10), by means of which rams or the like (20, 22) the bottom flap layers (38, 40, 42) can be pressed against an abutment, possibly an abutment (44) of the cross-sealing tool (26) or against such tool itself, the same being operative as abutment.

9. An apparatus according to claim 8, characterised in that the sealing rams (20, 22) are heatable.

10. An appaatus according to claim 8 or 9, characterised in that the abutment (44) is heatable.

11. An apparatus according to any of claims 8 - 10, characterised in that the sealing rams (20, 22) and/or the abutment (44) are/is coolable at least in zones.

12. An apparatus according to any of claims 8 - 11, characterised by means for applying a (hot) adhesive to those surfaces of the bottom flap layers (38, 40, 42) which it is required to stick together.

13. An apparatus according to claim 12, characterised in that the sealing rams (20, 22) have injection means for piercing at least one of the bottom flap layers (38, 40, 42) and introducing the adhesive between the top layer (38) and the middle layer (40).

14. An apparatus according to claim 12 or 13, characterised by adhesive-applying means which engage laterally in the zone of the bottom flaps (34, 36).

15. An apparatus according to claim 14, characterised in that the adhesive-applying means have injection means for piercing the middle bottom flap layer (40) and introducing the adhesive between the same and the lowest bottom flap layer (42).

**Revendications**

1. Sac à plis de fond, comportant deux goussets de fond (34, 36) latéraux, en principe triangulaires, dans la zone desquels la matière tubulaire utilisée pour la fabrication est triple, et une surface de base en principe rectangulaire, produite ainsi, qui est formée par une surface de fond, en principe rectangulaire présentant une couture longitudinale de fond (28), et sur laquelle viennent aboutir les goussets de fond (34, 36) venant vers l'intérieur, des côtés du sac, et au moins les deux couches des goussets (34, 36) écartées de la surface de fond étant reliées entre elles, caractérisé par le fait que sont prévues, en principe transversales par rapport à la couture longitudinale de fond (28) an moins une couture de liaison (46, 48) disposée an voisinage de l'arête latérale correspondante du sac à plis de fond, ainsi qu'une couture de liaison (50, 52) disposée an voisinage de la pointe de gousset correspondante, contures qui sont en forme de lignes droites et dont une au moins est subdivisée en longueur.

2. Sac à plis de fond selon la revendication 1, caractérisé par le fait que les contures de liaison (46, 48) les plus proches des arêtes latérales du sac à plis de fond sont formées en étant subdivisées en longueur.

3. Sac à plis de fond selon la revendication 1 ou 2, fabriqué en matière scellable à chaud, en particulier en matière thermoplastique caractérisé par le fait que les couches de goussets de foud (38, 40, 42) sont scellées ensemble à chaud.

4. Sac à plis de fond selon l'une des revendications précédentes, caractérisé par le fait que les couches de goussets de fond (38, 40, 42) sont collées ensemble, de préférence collées à chaud.

5. Procédé de fabrication du sac à plis de fond selon l'une des revendications précédentes, en matière tubulaire sans fin, éventuellement formée à partir d'une matière plate sans fin, ainsi que le remplissage du sac à plis de fond, dans lequel, pour produire les goussets de fond (34, 36), la matière tubulaire est pliée pour s'écarter des côtés du sac à formes et, après formation de la couture longitudinale de fond (28) par compression de la matière tubulaire et liaison l'une avec l'autre des couches de matière tubulaire amenées ainsi en opposition l'une par rapport à l'autre, suivies d'un sectionnement, le remplissage s'opère avec de la matière de remplissage, avantageusement fluide, caractérisé par le fait que sont prévues, en principe transversales par rapport à la couture longitudinale de fond (28) an moins une couture de liaison (46, 48) disposée au voisinage de l'arête latérale correspondante du sac à plis de fond, ainsi qu'une couture de liaison (50, 52) disposée au voisinage de la pointe de gousset correspondant, coutures dont l'une au moins (46, 48) est en forme de ligne droite et formée en étant subdivisée en longueur.

6. Procédé selon la revendication 5, caractérisé par le fait que les couches de goussets de fond (38, 40, 42), lorsque est utilisée de la matière scellable à chaud, en particulier de la matière thermoplastique, sont scellées ensemble à chaud.

7. Procédé selon la revendication 5, caractérisé par le fait que les couches de goussets de fond (38, 40, 42) sont collées ensemble, de préférence collées à chaud.

8. Dispositif pour la mise en oeuvre du procédé selon l'une des revendications 5 à 7, des moyens de liaison des couches de goussets (38, 40, 42) mobiles, en principe verticalement, dans la zone des goussets (34; 36), étant prévus, caractérisé par le fait que, à l'intérieur du puits de formage (10), sont disposés des puits de guidage (16, 18) latéraux, associés, en principe de façon étanche à la matière de remplissage, par rapport à la zone de remplissage, et dans chacun desquels sont mobiles verticalement des poinçons de scellement (20, 22), au moyen desquels les couches (38, 40, 42) des goussets (34, 36) sont pressées contre une butée, éventuellement une butée (44) de l'outil de scellement transversal (26) on l'outil de scellement servant de butée.

9. Dispositif selon la revendication 8, caractérisé par le fait que les poinçons de scellement (20, 22) sont chauffables.

10. Dispositif selon la revendication 8 ou 9, caractérisé par le fait que la butée (44) est chauffable.

11. Dispositif selon l'une des revendications 8 à 10, caractérisé par le fait que les poinçons de scellement (20, 22) et/ou la butée (44) sont refroidissables au moins en partie.

12. Dispositif selon l'une des revendications 8 à 11, caractérisé par des moyens d'application d'une colle (à chaud) sur les surfaces des couches de goussets (38, 40, 42) à coller les unes aux autres.

13. Dispositif selon la revendication 12, caractérisé par le fait que les poinçons de scellement (20, 22) possèdent un moyen d'injection pour perforer au moins une des couches des goussets (38, 40, 42) et introduire la colle entre la couche supérieure (38) et la couche médiane (40) des goussets.

14. Dispositif selon la revendication 12 ou 13, caractérisé par des moyens d'application de colle s'engageant latéralement dans le zone des goussets (34, 36).

15. Dispositif selon la revendication 14, caractérisé par le fait que les moyens d'application de colle comportent un moyen d'injection ponr perforer la couche moyenne (40) des goussets et introduire le colle entre la couche moyenne (40) et la couche inférieure (42) des goussets.

**FIG.1**

FIG.2

FIG.3

3